# DEMANDE DE BREVET EUROPEEN

(11) **EP 4 074 280 A1**
(43) Date de publication de la demande: **19.10.2022**
(21) Numéro de dépôt: 22164556.7
(22) Date de dépôt: 25.03.2022
(51) Int. Cl.: A61C 5/42

(54) **INSTRUMENT CANALAIRE A PAS VARIABLE**

(30) Priorité: 12.04.2021 FR 2103754
(71) Demandeur: Micro-Mega International, 25000 Besancon (FR)
(72) Inventeur: DEVALLOIR, Marie, 25000 BESANCON (FR); VINCENT, Marin, 54690 LAY-SAINT-CHRISTOPHE (FR)
(74) Mandataire: Cabinet Laurent & Charras

(57) **Abrégé**

L'invention concerne un instrument canalaire (10) comportant une lame comprenant une pluralité de lèvres (20) de coupe hélicoïdales, la lame étant de forme conique et s'étendant depuis une pointe (11) en direction d'un talon (12) de l'instrument, les lèvres hélicoïdales (20) présentant un pas augmentant le long d'un axe longitudinal de l'instrument depuis la pointe (11) vers le talon (12).

Selon l'invention, il comprend un ratio entre le pas du côté du talon (12) et le pas de l'extrémité de la pointe (11) compris entre 2 et 4.

## Description

### Domaine technique

L'invention se rapporte au domaine technique de la dentisterie, et en particulier aux instruments utilisés dans le traitement canalaire.

### Art antérieur

Les instruments dédiés au traitement canalaire présentent des lèvres de coupe hélicoïdales dont le rôle est d'enlever les débris du canal radiculaire de la dent à traiter. Lorsque des instruments canalaires sont utilisés selon un mouvement de rotation continue, les lèvres sont actives en permanence. C'est-à-dire qu'elles coupent en permanence lors du mouvement de rotation les tissus ou les matières présentes dans le canal radiculaire de la dent, et la forme hélicoïdale des lèvres entraîne la remontée et l'évacuation des débris hors de la dent. Cette rotation continue peut toutefois entraîner une sensation de vissage ou d'aspiration qui est désagréable pour le patient ainsi que pour le praticien.

Aussi certaines pratiques médicales consistent à utiliser l'instrument dans un mouvement de rotation alternative, ou réciproque, lors duquel l'instrument est d'abord entraîné dans un premier sens de rotation qui correspond au sens de coupe des lèvres hélicoïdales, puis dans un sens de rotation opposé lors duquel les lèvres de coupe sont inactives, c'est-à-dire ne coupent pas. Ce mouvement de retour permet de réduire, voire de supprimer la sensation de vissage ou d'aspiration. De telles utilisations sont largement décrites dans l'état de l'art de la technique, malgré leur inconvénient majeur qui est de freiner l'évacuation des débris coupés. En effet, lors de la rotation dans le sens opposé, les débris redescendent dans le canal au lieu de remonter.

Afin de faciliter l'évacuation des débris, il peut être envisagé de fabriquer des instruments canalaires, tels que des limes ou des alésoirs à canaux, munis de lèvres de coupe de forme hélicoïdale, et dont les paramètres géométriques évoluent le long de l'instrument.

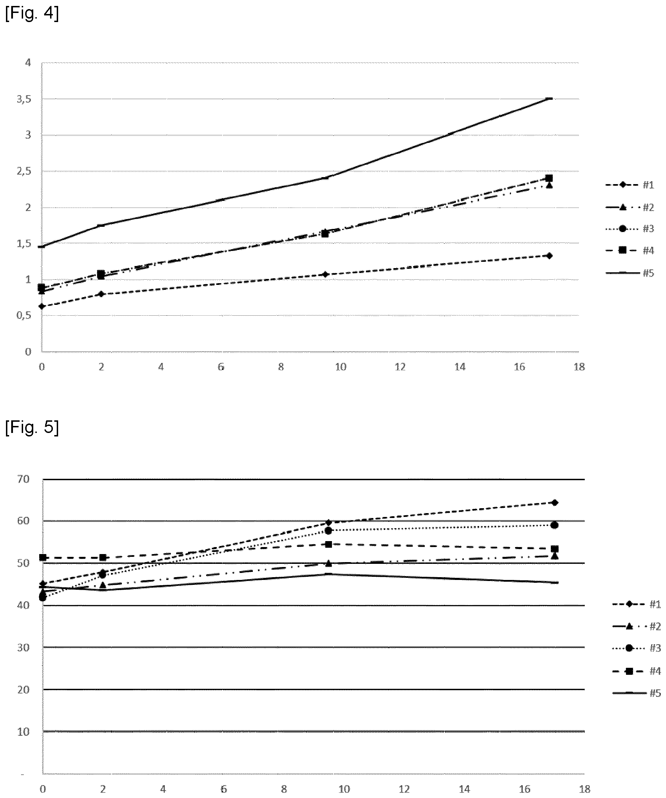

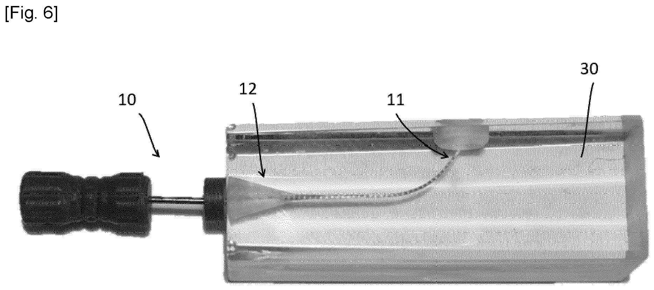

Par exemple le document WO2005/089370 décrit une lime dont le pas des lèvres varie sur sa longueur. Les tables 1, 2 et 3 accompagnées des figures 5(a) à 7(b) montrent des limes dont le pas augmente depuis la pointe de la lime jusqu'au talon. Cependant l'évolution du pas n'est pas satisfaisante au regard de l'évacuation des débris.

Le brevet EP2485675 dont est titulaire le Demandeur et dont la description est ici incluse par référence, décrit quant à lui un alésoir à canaux dont l'évolution des paramètres géométriques des lèvres entraînent une modification du nombre de lèvres sur la longueur de l'instrument. Par exemple, l'instrument présente trois lèvres au niveau de sa pointe et deux lèvres au niveau de son talon. Bien que les limes décrites dans ce document comprennent dans leur portion médiane une lèvre auxiliaire, qui n'est pas une lèvre de coupe, et qui aide à remonter les débris depuis le canal, ces limes peuvent encore être améliorées.

### Exposé de l'invention

L'un des buts de l'invention est de pallier les inconvénients précités en concevant un instrument canalaire qui puisse être utilisé en réciprocité tout en garantissant une évacuation satisfaisante des débris depuis le canal radiculaire.

À cet effet, il a été mis au point un instrument canalaire comportant une lame comprenant une pluralité de lèvres de coupe hélicoïdales, la lame étant de forme conique et s'étendant depuis une pointe de l'instrument en direction d'un talon de l'instrument, les lèvres hélicoïdales présentant un pas augmentant le long d'un axe longitudinal de l'instrument depuis la pointe vers le talon.

Selon l'invention, l'instrument canalaire comprend un ratio entre le pas du côté du talon et le pas de la pointe compris entre 2 et 4.

De cette manière, la pointe de l'instrument présente un pas de valeur faible, ce qui permet aux lèvres de couper sans induire une sensation importante de vissage ou d'aspiration, alors que la partie haute de l'instrument, du côté du talon, présente un pas de valeur nettement supérieure permettant d'évacuer les débris efficacement. Le pas important de l'instrument à ce niveau n'implique pas de sensation de vissage trop importante, puisque c'est principalement au niveau de la pointe de l'instrument qu'apparait ce désagrément. Ainsi, l'instrument selon l'invention permet de combiner une coupe correcte au niveau de la pointe, et une évacuation importante des débris du côté du talon.

Avantageusement, le pas croît régulièrement, ou de façon continue, depuis la pointe vers le talon de sorte qu'il n'y ait pas d'arêtes vives au niveau des lèvres de coupe, ni de discontinuité dans la coupe effectuée par celles-ci.

Afin que l'instrument suive le canal radiculaire et respecte son tracé anatomique, les lèvres se réunissent au niveau de la pointe et forment une extrémité de l'instrument canalaire qui est non-coupante, ou non active. De cette manière, l'instrument ne risque pas de dévier du canal et de perforer la dent.

Pour favoriser l'avance de l'instrument au sein du canal, l'extrémité non-coupante présente une forme conique dont l'angle au sommet est compris entre 60 et 130 degrés, et de préférence entre 80 et 110 degrés.

Dans un mode de réalisation préféré, l'instrument présente un nombre de lèvres hélicoïdales qui varie le long de l'axe longitudinal de la lame, et la lame comprend successivement, le long de l'axe longitudinal :
- une première portion dans laquelle la lame comprend un premier nombre de lèvres hélicoïdales ayant des premières caractéristiques géométriques identiques au niveau des sections orthogonales à l'axe longitudinal, le long de la première portion ;
- une deuxième portion dans laquelle les lèvres hélicoïdales ont des caractéristiques géométriques différentes d'une lèvre à l'autre, de sorte qu'au moins une des lèvres hélicoïdales n'est plus une lèvre de coupe ; et
- une troisième portion dans laquelle la lame comprend un deuxième nombre différent du premier nombre de lèvres hélicoïdales, et dans laquelle les lèvres hélicoïdales ont des deuxièmes caractéristiques géométriques identiques au niveau des sections orthogonales à l'axe longitudinal, le long de la troisième portion, les deuxièmes caractéristiques géométriques étant différentes des premières caractéristiques géométriques. Cette conception permet de bénéficier, au sein de la deuxième partie, d'une lèvre auxiliaire dont la géométrie peut être adaptée, et en particulier en vue de favoriser l'évacuation des débris.

Dans ce mode, au moins sur une partie de la deuxième portion, un pas d'hélice d'une lèvre est différent du pas d'hélice des autres lèvres. Cela permet de bénéficier, au sein de la deuxième partie, d'une lèvre auxiliaire dont le pas est adapté en vue de favoriser l'évacuation des débris.

L' instrument canalaire selon les caractéristiques techniques précitées possède une résistance à la torsion et/ou à la fatigue cyclique lors d'une simulation de traitement, avec des rotations alternées autour de son axe longitudinal, sur une portion d'arc dans un premier sens correspondant au sens de coupe des lèvres puis sur une portion d'arc dans un sens opposé, avec un ratio entre la portion d'arc dans le premier sens et la portion d'arc dans le sens opposé qui est supérieur à 2 et inférieur 3. Ce ratio d'arc supérieur à 2 permet de bénéficier des bonnes performances de coupe et d'évacuation des débris. Limiter sa valeur à moins de 3 évite toutefois d'induire trop de sensation de vissage ou d'aspiration.

Avantageusement, la portion d'arc dans le premier sens vaut 170 degrés et la portion d'arc dans le sens opposé vaut 60 degrés, ce qui permet d'effectuer une rotation complète de l'instrument en un peu plus de 3 tours seulement. La durée du traitement n'est pas pénalisée.

### Brève description des dessins

[Fig.1] est une vue de face partielle d'un instrument selon l'invention.
[Fig.2] est une vue de détail de la figure 1.
[Fig.3] est une vue de dessus d'une gamme de cinq instruments selon l'invention.
[Fig.4] est un graphe montrant l'évolution du pas de lèvres hélicoïdales de plusieurs instruments selon l'invention.
[Fig.5] est un graphe montrant l'évolution de l'angle d'hélice de lèvres hélicoïdales de tels instruments.
[Fig.6] est une photographie d'un instrument lors d'essais précliniques.

### Description détaillée de l'invention

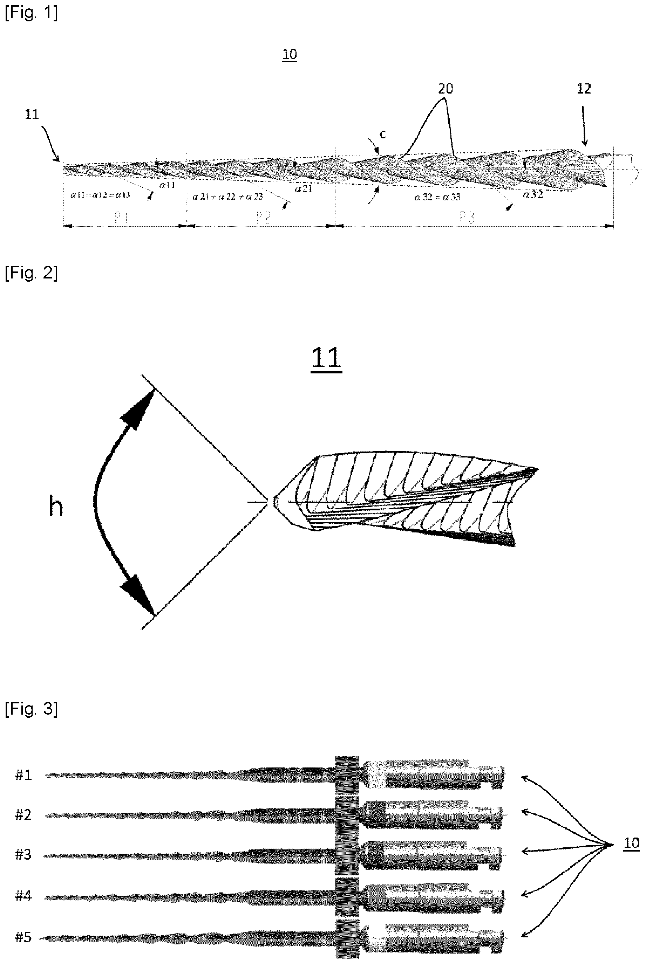

En référence aux figures 1 et 2, l'invention concerne un instrument canalaire (10) comprenant une lame, s'étendant d'une pointe (11) en direction d'un talon (12), selon un axe longitudinal de l'instrument (10). Il est entendu que l'extrémité arrière de l'instrument (10) n'est pas représenté et que les différentes exécutions pouvant former ledit talon (12) étant connues de l'homme du métier, elles ne seront pas plus détaillées ici.

La lame de l'instrument (10) est généralement taillée, dans un matériau adapté tel qu'un alliage de nickel et de titane bien connu sous le nom de Nitinol, et présente une forme conique. Cette conicité (c) est généralement exprimée en pourcentage et peut être fixe. Par exemple, une lime peut avoir une conicité (c) comprise entre 3% et 8%, ou de préférence entre 4% et 6%. La conicité (c) peut également être étagée, ou évoluer sur la longueur de la lame, de sorte que celle-ci présente une forme se rapprochant par exemple de celle d'une ogive. Dans ce document, le terme « conicité » couvre les différents types d'exécutions.

La lame comprend au moins une lèvre (20) de coupe, et généralement entre 2 et 4 lèvres (20) de coupe. Ces lèvres (20) sont de forme hélicoïdale, de sorte que les débris coupés sont naturellement évacués en direction du talon (12) de la lame lorsque l'instrument (10) est entrainé en rotation dans le sens dit « actif ».

Si les lèvres (20) s'enroulent en sens S, également appelé pas à gauche, le sens de rotation actif est le sens antihoraire. A l'inverse, si les lèvres (20) s'enroulent en sens Z, également appelé pas à droite, le sens de rotation actif est le sens horaire. Le choix du sens d'enroulement des lèvres (20) ne répond à aucune convention, et peut être choisi à l'envi.

Selon l'invention, le pas des lèvres (20) évolue le long de la lame, de sorte à garantir à la fois de bonnes performances de coupe et de bonnes performances d'évacuation des débris, sans toutefois induire les sensations d'aspiration ou de vissage qui sont désagréables.

A l'aide de différents essais, le Demandeur a pu déterminer que les performances précitées sont maximisées lorsqu'un ratio entre le pas au niveau de la pointe (11) et le pas au niveau du talon (12) est compris entre 2 et 4. Par exemple, pour une dimension donnée d'instrument (10), le pas au niveau de la pointe (11) vaut 1,45 mm et le pas au niveau du talon (12) vaut 3,5 mm, de sorte que leur ratio vaut 2,41.

Les instruments (10) sont fournis selon différentes tailles afin que le praticien puisse sélectionner l'instrument (10) adéquat selon la dimension et la morphologie de la dent à traiter. Par exemple, au sein de la même gamme, des instruments (10) de conicité (c) de 4% ou 6% sont disponibles.

Aussi, afin de respecter le ratio de pas selon l'invention, les angles d'enroulement des lèvres (20) sont adaptés le long de l'instrument. L'homme du métier connaissant la relation géométrique entre le pas, l'angle de l'hélice et le diamètre de l'instrument (10), il saura effectuer le taillage adéquat en fonction du diamètre nominal de l'instrument (10), de sa conicité (c) fixe ou variable, *etc.*

La figure 3 illustre une gamme de cinq instruments (10) selon l'invention, réalisés à partir d'un fil de même diamètre, mais ayant été taillés différemment. Sur cette figure, de haut en bas :
- l'instrument #1 a un diamètre de pointe de 0,2 mm et une conicité (c) de 4% ;
- l'instrument #2 a un diamètre de pointe de 0,25 mm et une conicité (c) de 4% ;
- l'instrument #3 a un diamètre de pointe de 0,25 mm et une conicité (c) de 6% ;
- l'instrument #4 a un diamètre de pointe de 0,35 mm et une conicité (c) de 4% ;
- l'instrument #5 a un diamètre de pointe de 0,45 mm et une conicité (c) de 4%.

Dans le mode de réalisation préféré, l'instrument (10) a une géométrie complexe et comprend trois lèvres (20) de coupe au niveau de la pointe (11), qui se transforment de sorte qu'il n'y a plus que deux lèvres (20) de coupe au niveau du talon (12). L'instrument (10) présente donc une section variable : au niveau de la pointe (11), les trois lèvres (20) constituent une section en forme de triple hélice, alors qu'au niveau du talon (12) les deux lèvres (20) constituent une section en forme de « S ».

L'intérêt de faire varier le nombre de lèvres (20) le long de l'instrument (10) est de disposer au niveau de la pointe (11) d'un nombre de lèvres (20) important, par exemple trois, ce qui améliore la tendance de l'instrument (10) à se recentrer au sein du canal lors de sa progression vers l'apex de la racine dentaire.

À l'inverse, un nombre réduit de lèvres (20) dans la partie supérieure, par exemple deux, permet de disposer de plus de latitude pour adapter les caractéristiques géométriques des lèvres (20), telles que les angles de coupe, de dépouille, ou d'hélice, de sorte que les performances de l'instrument (10) peuvent être améliorées à cet endroit et en particulier la remontée des débris en direction de la couronne de la dent.

Au surplus, dans une deuxième portion (P2) de l'instrument (10), au niveau de laquelle une des lèvres (20) évolue de sorte à disparaître progressivement, cette lèvre (20) n'exerce plus de fonction de coupe. Ses caractéristiques géométriques peuvent donc être adaptées afin de favoriser la remontée des débris de coupe.

Le graphe de la figure 4 montre l'évolution du pas le long de chaque instrument (10) de la gamme. Sur ce graphe, l'abscisse est la distance à partir de la pointe (11) de l'instrument (10), et l'ordonnée est la valeur du pas. Les valeurs des pas des instruments #2, #3 et #4 étant proches, les courbes ont tendance à se chevaucher. Toutefois il est clairement visible que le pas du côté du talon (12) est systématiquement compris entre le double et le quadruple du pas au niveau de la pointe (11).

Le graphe de la figure 5 montre l'évolution de l'angle d'hélice, ou angle d'enroulement des lèvres (20), le long de chaque instrument (10) de la gamme. Sur ce graphe, l'abscisse est la distance à partir de la pointe (11) de l'instrument (10), et l'ordonnée est la valeur de l'angle d'hélice. La relation entre le pas et l'angle d'hélice faisant également intervenir le diamètre d'enroulement, le ratio selon l'invention n'est pas directement visible sur ce graphe, ce dernier servant cependant à illustrer de façon plus visible l'évolution des caractéristiques géométriques des lèvres (20) le long de l'instrument (10).

Des angles d'hélice (a) sont également légendés figure 1 :
- Les angles (a11, a12, a13,) sont respectivement les angles d'hélice des première, deuxième et troisième lèvres (20) au niveau d'une première portion (P1) de l'instrument (10) ;
- Les angles (α21, α22, α23,) sont respectivement les angles d'hélice des première, deuxième et troisième lèvres (20) au niveau de la deuxième portion (P2) de l'instrument (10) ;
- Les angles (α31, α32) sont respectivement les angles d'hélice des première, deuxième lèvres (20) au niveau d'une troisième portion (P3) de l'instrument (10).

De préférence, le pas varie de façon continue le long de l'instrument (10), de sorte qu'il n'y ait pas discontinuité au niveau des lèvres (20). Ces discontinuités pourraient se traduire au niveau des lèvres (20) par des angles vifs ou des points de rebroussement qui ne sont pas recherchés car ils pourraient entrainer des blessures lors du traitement.

De préférence, la pointe (11) de l'instrument (10) est non active, ce qui permet à l'instrument (10) de suivre l'anatomie naturelle du canal radiculaire. Si la pointe (11) de l'instrument (10) était active, se présenterait alors le risque que la pointe (11) fore la dent selon une autre direction que celle du canal, nuisant ainsi au bon déroulement du traitement.

Le demandeur a procédé à des essais précliniques d'utilisation d'instruments (10) selon l'invention. Ces essais consistent entre autres à simuler le traitement d'une dent, à l'aide de blocs de résine (30) tel qu'illustré figure 5. L'utilisation de canaux simulés dans des blocs de résine (30) a été largement décrite dans la littérature, ce modèle permet une bonne standardisation et évite les variables qui peuvent être causées par des différences d'anatomie : forme, taille, conicité, degré, emplacement, rayon de courbure et dureté dentinaire de dents extraites.

L'évaluation *in vitro* sur simulateurs de la performance des instruments (10) selon l'invention a permis de définir les conditions d'utilisation optimales de l'instrument (10). Les paramètres suivants ont par exemple été étudiés :
- respect de trajectoire canalaire tels que le centrage ou déplacement ;
- comptage d'autres manifestations éventuelles de type butées, fausses routes ou perforations du canal radiculaire ;
- génération de débris lors de la mise en forme du canal ainsi que la direction de déplacement apicale ou coronaire des débris ;
- résistance à la fatigue cyclique et à la fatigue en torsion.

Il ressort des études effectuées qu'une utilisation de l'instrument (10) en réciprocité est possible. En particulier, les meilleurs résultats sont obtenus en effectuant une rotation dans le sens actif d'une portion d'arc de 170°, et une rotation dans le sens opposé d'une portion d'arc de 60°. D'autres valeurs d'angles ont été testées, afin de laisser la possibilité au praticien d'ajuster lui-même les mouvements de réciprocité, s'il souhaite par exemple limiter encore plus la sensation de vissage produite en réduisant l'amplitude du mouvement dans le sens de rotation actif. De façon générale, il ressort des essais effectués qu'un ratio entre la portion d'arc dans le sens actif et la portion d'arc dans le sens opposé doit être supérieur à 2 et inférieur 3.

Bien que l'instrument (10) puisse être utilisé de différentes manières, il doit pouvoir résister :
- soit à rotation continue, ce qui correspond à un usage classique ;
- soit à une rotation en réciprocité définie par une rotation dans le sens actif d'une portion d'arc de 170°, et une rotation dans le sens opposé d'une portion d'arc de 60°, qui permet de diminuer la sensation d'aspiration, de diminuer les risques de bris, tout en conservant une durée de traitement raisonnable.

Par résister, on signifie que l'utilisation est sûre (réduction des occurrences de bris), et efficace (traitement canalaire réussi). La résistance est évaluée en effectuant des essais de mise en forme canalaire avec une vitesse de rotation de 300 tours par minute et un couple de 5 Ncm, dans des dents extraites (molaires maxillaires), ou dans des simulateurs (blocs de résine reproduisant un canal radiculaire). La résistance est insuffisante s'il y a un bris ou une déformation plastique de l'instrument.

Si l'instrument (10) doit être utilisé à d'autres vitesses ou d'autres couples, par exemple entre 200 tr/min et 500 tr/min, ou à des couples compris entre 2 Ncm et 6 Ncm, alors les essais peuvent être adaptés en conséquence.

La géométrie et le matériau de l'instrument (10) sont donc choisis pour obtenir cette résistance.

En pratique, la dynamique de l'instrument (10) est réglée au moyen d'une interface de la pièce à main recevant l'instrument (10). L'interface comprend des moyens de contrôle d'un moteur qui entraîne l'instrument (10), selon les vitesses et, le cas échéant, les angles de réciprocité paramétrés. Le praticien réglant la dynamique est tenu de respecter les informations fournies par le fabricant de l'instrument (10) afin de ne pas commettre un mésusage, dans lequel la sureté et/ou l'efficacité de l'utilisation ne seraient pas garantis.

L'instrument (10) peut être conformé différemment des figures sans sortir du cadre de l'invention, qui est défini par les revendications.

En variante non représentée, l'instrument comporte plus de 3 lèvres (20) à sa pointe. Selon une autre variante non représentée, le nombre de lèvres (20) est constant.

En outre, les caractéristiques techniques des différents modes de réalisation et variantes mentionnés ci-dessus peuvent être, en totalité ou pour certaines d'entre elles, combinées entre elles. Ainsi, l'instrument (10) peut être adapté en termes de coût, de fonctionnalités et de performance.

## Revendications

1. Instrument canalaire (10) comportant une lame comprenant une pluralité de lèvres (20) de coupe hélicoïdales, la lame étant de forme conique et s'étendant depuis une pointe (11) en direction d'un talon (12) de l'instrument, les lèvres hélicoïdales (20) présentant un pas augmentant le long d'un axe longitudinal de l'instrument depuis la pointe (11) vers le talon (12) ***caractérisé en* ce *qu'il*** comprend un ratio entre le pas du côté du talon (12) et le pas de la pointe (11) compris entre 2 et 4.

2. Instrument canalaire (10) selon la revendication 1 ***caractérisé en ce que*** le pas croît régulièrement depuis la pointe (11) vers le talon (12).

3. Instrument canalaire (10) selon la revendication 1 ***caractérisé en ce que*** les lèvres (20) se réunissent au niveau de la pointe (11) et forment une extrémité de l'instrument canalaire (10) qui est non-coupante.

4. Instrument canalaire (10) selon la revendication 3 ***caractérisé en ce que*** l'extrémité non-coupante présente une forme conique dont l'angle au sommet (h) est compris entre 60 et 130 degrés, et de préférence entre 80 et 110 degrés.

5. Instrument canalaire (10) selon la revendication 1 ***caractérisé en ce qu'un*** nombre de lèvres hélicoïdales (20) varie le long de l'axe longitudinal de la lame, et la lame comprend successivement, le long de l'axe longitudinal :
- une première portion (P1) dans laquelle la lame comprend un premier nombre de lèvres hélicoïdales (20) ayant des premières caractéristiques géométriques identiques au niveau des sections orthogonales à l'axe longitudinal, le long de la première portion (P1) ;
- une deuxième portion (P2) dans laquelle les lèvres hélicoïdales (20) ont des caractéristiques géométriques différentes d'une lèvre à l'autre, de sorte qu'au moins une des lèvres hélicoïdales (20) n'est plus une lèvre de coupe ; et
- une troisième portion (P3) dans laquelle la lame comprend un deuxième nombre différent du premier nombre de lèvres hélicoïdales (20), et dans laquelle les lèvres hélicoïdales (20) ont des deuxièmes caractéristiques géométriques identiques au niveau des sections orthogonales à l'axe longitudinal, le long de la troisième portion (P3), les deuxièmes caractéristiques géométriques étant différentes des premières caractéristiques géométriques.

6. Instrument canalaire (10) selon la revendication 5 ***caractérisé en ce que,*** au moins sur une partie de la deuxième portion (P2), un pas d'hélice d'une lèvre (20) est différent du pas d'hélice des autres lèvres (20).

7. Instrument canalaire (10) selon l'une des revendications précédentes, ***caractérisé en ce qu'il*** possède une résistance à la torsion et/ou à la fatigue cyclique lors d'une simulation de traitement, avec des rotations alternées autour de l'axe longitudinal de l'instrument (10), sur une portion d'arc dans un premier sens correspondant au sens de coupe des lèvres puis sur une portion d'arc dans un sens opposé, avec un ratio entre la portion d'arc dans le premier sens et la portion d'arc dans le sens opposé qui est supérieur à 2 et inférieur 3.

8. Instrument canalaire (10) selon la revendication 7, ***caractérisé en ce que*** la portion d'arc dans le premier sens vaut 170 degrés et la portion d'arc dans le sens opposé vaut 60 degrés.
